(19)

Europäisches
Patentamt

European
Patent Office

Office européen
des brevets

(11) **EP 4 345 989 A1**

(12) **EUROPEAN PATENT APPLICATION**

(43) Date of publication:
**03.04.2024 Bulletin 2024/14**

(21) Application number: **22199150.8**

(22) Date of filing: **30.09.2022**

(51) International Patent Classification (IPC):
**H01M 10/625** (2014.01)   **H01M 10/613** (2014.01)
**H01M 10/633** (2014.01)   **H01M 10/651** (2014.01)
**H01M 10/652** (2014.01)

(52) Cooperative Patent Classification (CPC):
**H01M 10/625; H01M 10/613; H01M 10/633;**
**H01M 10/651; H01M 10/652;** H01M 2220/20

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **VOLVO TRUCK CORPORATION**
**405 08 Göteborg (SE)**

(72) Inventors:
• **AHMED, Istaq**
  **422 44 GÖTEBORG (SE)**

• **HAMRIN, Alice**
  **417 06 GÖTEBORG (SE)**
• **TINTIGNAC, Sophie**
  **418 71 GÖTEBORG (SE)**
• **ROY CHOWDHURY, Niladri**
  **422 43 HISINGS BACKA (SE)**
• **TAMADONDAR, Masood**
  **405 08 GÖTEBORG (SE)**
• **RAJU HASBAVI, Praveen**
  **417 53 GÖTEBORG (SE)**
• **GISKE, Gustav**
  **121 54 JOHANNESHOV (SE)**

(74) Representative: **Kransell & Wennborg KB**
**P.O. Box 2096**
**403 12 Göteborg (SE)**

(54) **IMPROVED COOLING OF BATTERY CELLS**

(57)    A method (200) of determining one or more voltage threshold values for controlling a cooling of battery cells (112) is provided, including determining, during e.g. charging of the battery cells, a charging voltage threshold value for starting or increasing a battery cell cooling, corresponding to a voltage across a reference set of battery cells at which a rate of change of temperature with respect to voltage of the reference set goes above a charging temperature rate threshold value. A method for using such one or more voltage threshold values for controlling a cooling of the battery cells, by comparing a measured voltage across the battery cells against the voltage threshold value(s) is also provided, as well as a corresponding device, controller, vehicle and computer programs and computer program products.

Fig. 7C

EP 4 345 989 A1

## Description

### Technical field

The present disclosure relates to the field of battery cells, such as used in e.g. battery packs of electric vehicles. In particular, the present disclosure relates to an improved way of controlling a cooling of such battery cells based on voltage measurements.

### Background

A battery pack includes one or more interconnected battery cells, wherein each cell contributes towards the overall voltage and/or capacity of the battery pack. As is commonly known, the aging of battery cells is accelerated by operation at high temperatures, which makes efficient cooling of the battery cells while charging or discharging imperative to prevent unnecessary degradation. This is particularly true for battery cells used in e.g. electric vehicles, as the replacement of such cells may be both costly and cumbersome.

In commonly available technology, the temperature of the battery cell(s) or battery pack is therefore monitored, such that the cooling may be controlled based on the current temperature. For this purpose, one or more temperature sensors are often positioned within the battery pack to provide temperature measurements to a controller responsible for controlling the cooling system. A response time of such temperature sensors may however be slow, which causes a delay between excessive heat being generated in a battery cell or battery pack and the adjustment/increasing of the cooling system in response thereto. During a life-time of e.g. an electric vehicle, such delay may therefore be responsible for unnecessary aging of the battery cell(s) and battery pack.

### Summary

To at least partially resolve the above-identified issue with aging of battery cell(s) and battery packs, the present disclosure provides an improved method of determining one or more voltage threshold values for controlling a cooling of one or more battery cells, a method for using such voltage thresholds for controlling the cooling of the one or more battery cells, and a corresponding device, controller, vehicle, and computer programs and computer program products as defined in the accompanying independent claims. Various embodiments of the envisaged methods, device, controller, vehicle, computer programs and computer program products are defined in the accompanying dependent claims.

According to a first aspect of the present disclosure, there is provided a first method of determining one or more voltage threshold values for controlling a cooling of one or more battery cells. The first method includes at least one of: i) determining, during a charging of a reference set of one or more battery cells, a charging voltage threshold value for starting or increasing a battery cell cooling, corresponding to a voltage across the reference set at which a rate of change of temperature with respect to voltage of the reference set goes above a charging temperature rate threshold value, and ii) determining, during a discharging of the reference set of one or more battery cells, a discharging voltage threshold value for starting or increasing a battery cell cooling, corresponding to a voltage across the reference set at which a rate of change of temperature with respect to voltage of the reference set goes above a discharging temperature rate threshold value.

According to a second aspect of the present disclosure, there is also provided a second method of controlling a cooling system for one or more battery cells. The second method includes: determining a first voltage across a first set of one or more battery cells during a charging or discharging of the first set; obtaining at least one of a charging voltage threshold value and a discharging voltage threshold value for starting or increasing a battery cell cooling, wherein the at least one of the charging voltage threshold value and the discharging voltage threshold value has been determined by performing the first method, and wherein the one or more battery cells of the reference set are at least similar to the one or more battery cells of the first set; predicting an upcoming increase in heat generation of the first set during a continuation of the charging or discharging of the first set by detecting or predicting the first voltage going above the respective charging or discharging voltage threshold value, and, in response to predicting the upcoming increase in heat generation of the first cell, starting or increasing a cooling of the first set.

The one or more battery cells of the first set may form part of a battery pack, and such a battery pack may e.g. be used to power an electric vehicle, be used in a charging station for electric vehicles, be used in e.g. a battery power supply connected to a DC grid to provide e.g. peak-shaving, or in any applications where battery packs are used and in need of sufficient cooling in order not to degrade unnecessarily fast. As used herein, "determining a first voltage" may include that the first voltage is (continuously) monitored, i.e. that at least several measurements are repeatedly performed, during at least one of a charging and discharging of the first set. Herein, it is assumed that during a charging of the first set, the first voltage will increase with time, such that the first voltage will at some point in time be below the charging voltage threshold value, and at some later point in time be above the charging voltage threshold value. Likewise, it is assumed that during discharging of the first set, the first voltage will decrease with time, such that the first voltage will at some point in time be above the discharging voltage threshold value, and at some later point in time be below the discharging voltage threshold value.

The present disclosure is based on a realization that a correlation exists between an increase in temperature of a battery cell and a voltage across the cell. By using this correlation, a future temperature increase can thus be predicted based only on battery cell voltage. In particular, the battery cell voltage is more directly connected to the inner workings of the battery cell and may thus, contrary to temperature sensors positioned on the outside of the cell, respond more quickly than temperature sensors to changes in temperature. The present disclosure thus improves upon currently available technology in that provides a method of determining suitable voltage thresholds to be used for cooling control, and also a method in which such volage thresholds are used to control the cooling system. This allows the cooling system to more quickly, and even proactively, react to changes in temperature of the battery cell, such that cooling may be started/increased earlier and adapted to an actual cooling requirement, and such that local heat generation may thus be more effectively suppressed. This while only relying on a reading of a voltage across a battery cell during the actual cooling control (or across several battery cells, such as two, more, or even all cells of a battery pack), without the need for temperature measurements by temperature sensors.

In some embodiments of the first method, the method may include determining at least one of the charging and discharging voltage threshold values from one or more experimental measurements of temperature of, and voltage across, the reference set during the respective charging and discharging of the reference set. Such measurements may e.g. be performed in a controlled lab environment. The one or more battery cells of the reference set may be exactly the same cells, or e.g. be cells of a same or similar type as that of the one or more battery cells of the first set (i.e. the set for which cooling control is to be applied). In particular, using reference cells may be advantageous in mass production, as a controller configured to perform the envisaged second method does not have to be configured differently for use with different cells (of a same or similar type).

In some embodiments of the first method, the method may include determining at least one of the charging and discharging voltage threshold values from one or more numerical simulations of temperature of, and voltage across, the reference set during the respective charging or discharging of the reference set. Phrased differently, a model of the behavior of one or more battery cells can be constructed and used for simulations, which provides advantages compared to experimental measurements in that the properties of the battery cells may be changed without having to construct/build new cells, and similar.

In some embodiments of the first method, the method may further include performing the charging or discharging of the reference set at a plurality of different ambient temperatures of the reference set, and determining at least one of the charging and discharging voltage threshold values for the each of the different ambient temperatures of the reference set. This may be advantageous because the exact form of the dependence of temperature (or rate of change of temperature) as a function of voltage may change with different ambient temperatures. By performing e.g. measurements/simulations for the reference set for different ambient temperatures, multiple values of the charging and discharging voltage thresholds may be determined for different ambient temperatures. If, at a later stage, it is desired to obtain such a value for a specific ambient temperature not included in the performed measurements/simulations, interpolation or extrapolation may e.g. be used to find a corresponding threshold value for such a specific ambient temperatures, based on threshold values for ambient temperatures included in the measurements/simulations which are e.g. nearby to the specific ambient temperature. As used herein, an "ambient temperature" of a set of one or more battery cells can be e.g. outside of the battery cell(s) or even further away, such as e.g. outside of a battery pack which the battery cells form part of.

In some embodiments of the second method, the method may include performing, as part of obtaining the at least one of the charging voltage threshold value and the discharging voltage threshold value, the first method according to the first aspect (or any embodiment thereof disclosed and discussed herein).

In some embodiments of the second method, the method may further include determining, during charging or discharging of the first set, a first ambient temperature of the first set, and obtaining the at least one of the charging voltage threshold value and the discharging voltage threshold value based on the first ambient temperature. Here, it is of course assumed that the various threshold voltages have been determined for multiple ambient temperatures (when performing a corresponding embodiment of the first method), and that e.g. interpolation or extrapolation may be used if the first ambient temperature does not exactly match an ambient temperature used when performing the embodiment of the first method.

According to a third aspect of the present disclosure, there is provided a device for determining one or more voltage threshold values for controlling a cooling of one or more battery cells. The device includes processing circuitry configured to cause the device to: i) determine, during a charging of a reference set of one or more battery cells, a charging voltage threshold value for starting or increasing a battery cell cooling, corresponding to a voltage across the reference set at which a rate of change of temperature with respect to voltage of the reference set goes above a charging temperature rate threshold value, and/or ii) determine, during a discharging of the reference set of one or more battery cells, a discharging voltage threshold value for starting or increasing a battery cell cooling, corresponding to a voltage across the reference set at which a rate of change of temperature with respect to voltage of the reference set goes above a discharging temperature rate threshold value. The device is thus configured to perform the first method of the first aspect.

In some embodiments of the device, the processing circuitry may be further configured to cause the device to perform any embodiment of the first method as disclosed and described herein.

According to a fourth aspect of the present disclosure, there is provided a controller for a cooling system for one or more battery cells. The controller includes processing circuitry configured to cause the controller to: determine a first voltage across a first set of one or more battery cells during a charging or discharging of the first set; obtain at least one of a charging voltage threshold value and a discharging voltage threshold value; predict an upcoming increase in heat generation of the first set by detecting or predicting that a) during a continued charging of the first set, the first voltage goes above the charging voltage threshold value, or b) during a continued discharging of the first set, the first voltage goes below the discharging voltage threshold value, and, in response to predicting the upcoming increase in heat generation of the first set, control the cooling system to start or increase a cooling of the first set. The controller is thus configured to perform the second method of the second aspect.

In some embodiments of the controller, the processing circuitry may be further configured to cause the controller to perform any embodiment of the second method as disclosed and described herein.

According to a fifth aspect of the present disclosure, there is provided a vehicle, such as e.g. an electric vehicle or semi-electric vehicle. The vehicle includes a first set of one or more battery cells (included as part of e.g. a battery pack) configured to provide power to a propulsion system of the vehicle (where the propulsion system for example includes one or more electric machines/motors). The vehicle further includes a cooling system configured to provide a cooling of the battery pack (i.e. of the one or more battery cells of the battery pack), and a controller for the cooling system, such as the controller of the fourth aspect or any embodiment thereof disclosed and described herein.

According to a sixth aspect of the present disclosure, there is provided a first computer program for determining one or more voltage threshold values for controlling a cooling of one or more battery cells. The first computer program includes computer code that, when running on processing circuitry of a device (such as e.g. the device of the third aspect or any embodiments thereof), causes the device to: i) determine, during a charging of a reference set of one or more battery cells, a charging voltage threshold value for starting or increasing a battery cell cooling, corresponding to a voltage across the reference set at which a rate of change of temperature with respect to voltage of the reference set goes above a charging temperature rate threshold value, and/or ii) determine, during a discharging of the reference set of one or more battery cells, a discharging voltage threshold value for starting or increasing a battery cell cooling, corresponding to a voltage across the reference set at which a rate of change of temperature with respect to voltage of the reference set goes above a discharging temperature rate threshold value. The computer code is thus such that it causes the device to perform the steps of the first method of the first aspect, or any embodiment thereof disclosed and described herein.

According to a seventh aspect of the present disclosure, there is provided a second computer program for controlling a cooling system for one or more battery cells. This computer program includes computer code that, when running on processing circuitry of a controller for (such as e.g. the controller of the fourth aspect, or any embodiments thereof), causes the controller to: determine a first voltage across a first set of one or more battery cells during a charging or discharging of the first set; obtain at least one of a charging voltage threshold value and a discharging voltage threshold value; predict an upcoming increase in heat generation of the first set by detecting or predicting that a) during a continued charging of the first set, the first voltage goes above the charging voltage threshold value, or b) during a continued discharging of the first set, the first voltage goes below the discharging voltage threshold value, and in response to predicting the upcoming increase in heat generation of the first set, control the cooling system to start or increase a cooling of the first set. The computer code is thus such that it causes the controller to perform the step(s) of the second method according to the second aspect, or any embodiments thereof disclosed and described herein.

According to an eight aspect of the present disclosure, there is one or more computer program products. Such a computer program product includes a computer-readable storage medium on which a computer program is stored. The computer program may e.g. be the first computer program of the sixth aspect, the second computer program of the seventh aspect, or e.g. a combination of both the first and second computer programs.

In some embodiments of the one or more computer program products, the computer-readable storage medium may be non-transitory.

Other objects and advantages of the present disclosure will be apparent from the following detailed description, the drawings and the claims. Within the scope of the present disclosure, it is envisaged that all features and advantages described with reference to e.g. the method of the first aspect are relevant for, apply to, and may be used in combination with also any feature and advantage described with reference to the method of the second aspect, the device of the third aspect, the controller of the fourth aspect, the vehicle of the fifth aspect, the computer program of the sixth aspect, the computer program of the seventh aspect, and the computer program product(s) of the eight aspect(s), and vice versa.

**Brief description of the drawings**

Exemplifying embodiments will now be described below with reference to the accompanying drawings, in which:

Figure 1 schematically illustrates embodiments of a device for determining various voltage thresholds for cooling control according to the present disclosure;

Figure 2A schematically illustrates a flowchart of embodiments of a first method according to the present disclosure;

Figure 2B schematically illustrates, in terms of a number of functional blocks, information flow in embodiments of a device performing the method of Figure 2A, according to the present disclosure;

Figure 3 schematically illustrates embodiments of a controller for a cooling system for one or more battery cells, according to the present disclosure;

Figure 4A schematically illustrates a flowchart of embodiments of a second method according to the present disclosure;

Figure 4B schematically illustrates, in terms of a number of functional blocks, information flow in embodiments of a controller performing the method of Figure 4A, according to the present disclosure;

Figures 5A and 5B schematically illustrate embodiments of a device according to the present disclosure;

Figures 6A and 6B schematically illustrate embodiments of a controller according to the present disclosure, and

Figures 7A to 7C schematically illustrate various curves of temperature, voltage and rate of change of temperature during charging and discharging of one or more battery cells as used in methods, devices and controllers envisaged herein.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments. In Figures illustrating a method, the steps performed are not necessarily to be performed in the illustrated order, but may be changed as desired as long as e.g. a first step producing an output used by a second step is always performed before the second step.

Likewise, if the output of the first step is not used to perform the second step, the order of the first and second steps may just as well be interchanged, if desired, or even performed simultaneously/in parallel.

**Detailed description**

The envisaged solution of how to improve cooling of one or more battery cells will now be described in more detail with reference to the Figures of the accompanying drawings, which illustrate various embodiments of envisaged methods, devices, controllers and how to obtain various voltage threshold values according to the present disclosure. In what follows, the terms "battery cell" and "cell" will be used interchangeably.

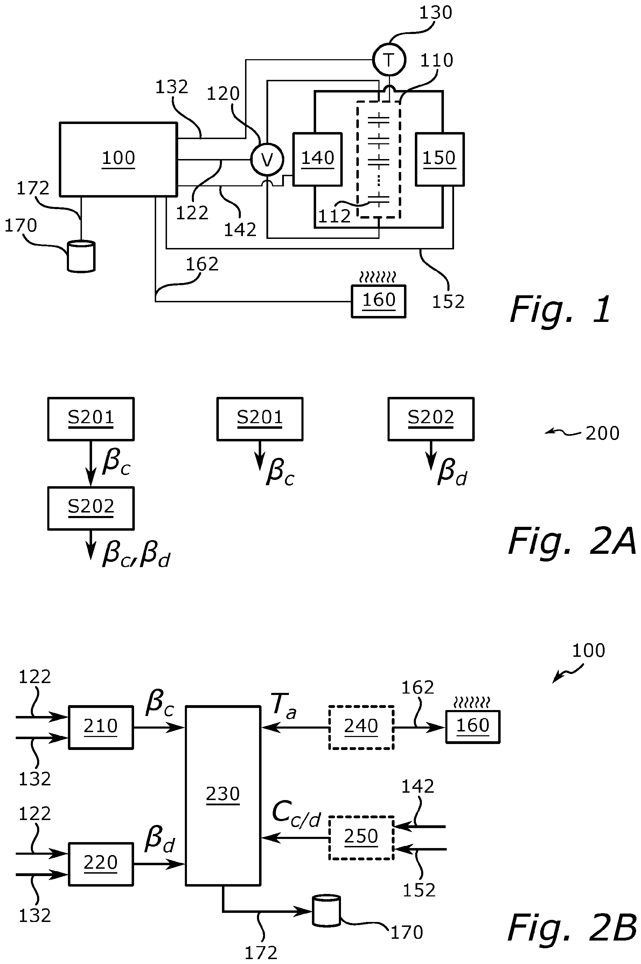

An envisaged device will now be described in more detail with reference to Figure 1.

Figure 1 schematically illustrates a device 100, which is configured to obtain/measure voltage and temperature of a reference set 110 of one or more battery cells 112. For this purpose, the device 100 has access to, or includes, voltage measuring means 120 configured to measure a voltage across one or more of the battery cells 112 of the reference set 110. The device 100 also has access to, or includes, temperature measuring means 130 configured to measure a temperature of one or more of the battery cells 112 of the reference set 110. The voltage measuring means 120 may for example include a volt-meter, an analog-to-digital converter (ADC), or any other suitable circuitry. The temperature measuring means 130 may for example include one or more temperature sensors, thermometers, and/or e.g. thermocouples, arranged in vicinity or at the one or more battery cells 112 of the reference set 110, such that the temperature of these one or more cells 112 can be obtained by the device 100 during charging or discharging of the reference set 110. Information about voltages and temperatures may be received by the device 100 via signal connections 122 and 132, respectively.

To charge the reference set 110, a charging device 140 may be connected to the reference set 110 to provide power to the reference set 110. Whether to connect/disconnect the charging device 140 may e.g. be controlled by the device 100, using e.g. a signal connection 142. To discharge the reference set 110, a load 150 may be connected to draw power from the reference set 110, and the connection/disconnection of the load may e.g. be controlled by the device 100 (using e.g. a circuit breaker, switch, or similar; not shown), using e.g. a signal connection 152.

Optionally, the device 100 may also be configured and so connected that it may control a charging rate (via the charging device 140) and/or a discharging rate (via a load 150) while charging and/or discharging the reference set 110. This charging/discharging rate may for example be communicated to the respective charging device 140 and load 150 via the signal connections 142 and 152, respectively.

Optionally, the device 100 may also be configured to control an ambient temperature of the one or more battery cells 112 of the reference set. This may be obtained by the device 100 being communicatively connected to an ambient temperature regulating means 160, optionally provided and configured to alter an ambient temperature $T_a$ of the reference set 110 during the charging and/or discharging of the reference set 110. The ambient temperature regulating means 160 may for example include an electric heater or similar, and may be communicatively connected to the device, such that the device 100 may request for a particular ambient temperature via e.g. a control signal 162 provided to the ambient temperature regulating means 160. The actual ambient temperature may e.g. be assumed to correspond to the requested ambient temperature, or the device 100 may e.g. be connected to an additional temperature measuring means (not shown) for measuring the true ambient temperature of the reference set 110.

A storage 170 may be provided in which the device 100 may store e.g. the determined charging and/or discharging voltage threshold value(s), by communicating with the storage 170 via e.g. a signal 172. The storage 170 may, in some embodiments, form part of the device 100 itself.

How the envisaged device 100 may perform embodiments of a (first) method as envisaged herein will now be described in more detail with reference also to Figures 2A and 2B.

Figure 2A schematically illustrates flowcharts of embodiments of a method 200 for obtaining one or more threshold values for controlling a cooling of one or more battery cells. Figure 2B schematically illustrates, in terms of a number of functional modules/blocks, the flow of information within the device 100 while performing embodiments of the method 200.

A charging threshold module 210 of the device 100 is configured to, in a step S201 of the method 200, determine a charging voltage threshold value $\beta_c$ for starting or increasing a battery cell cooling. The charging threshold module 210 is configured to determine the charging voltage threshold value (hereinafter also referred to as just the "charging threshold") during a charging of the reference set 110, e.g. by determining/measuring a voltage $V_{ref,c}$ across the reference set 110 using for example the voltage measuring means 120 for providing the signal 122. The charging threshold module 210 is also configured to measure a temperature $T_{ref,c}(V_{ref,c})$ of the reference set 110 as function of the voltage $V_{ref,c}$, by using e.g. the temperature measuring means 130 for providing the signal 132.

Temperature and voltage measurements may e.g. be performed, or at least the results thereof be provided, to the charging threshold module 210 at discreet time points $t_i$ each separated by a time distance $\Delta t$, e.g. such that $t_i = i\Delta t$, and such that $V_{ref,c}(i)$ and $T_{ref,c}(i)$, or $T_{ref,c}(V_{ref,c}(i))$, are the voltage and temperature, respectively, at time $t_i$. To avoid cluttering, the time indices will not be written out if not explicitly needed. As mentioned earlier herein, the charging of the reference set 110 may be performed at a controlled charging rate.

The charging threshold $\beta_c$ is determined as a voltage across the reference set 110 where, during charging of the reference set 110, a rate of change of a temperature $T'_{ref,c}(V_{ref,c})$ of the reference set 110 as a function of voltage goes above a charging temperature rate threshold value $\tau'_c$. The value of $\beta_c$ may e.g. be found by noting that at a time $t_n$,

$$T'_{ref,c}\left(V_{ref,c}(n)\right)$$ is below $\tau'_c$, and at a later time $t_{n+1}$, $$T'_{ref,c}\left(V_{ref,c}(n+1)\right)$$ is equal to or above $\tau'_c$. The value of $\beta_c$ may then e.g. be determined as $\beta_c = V_{ref,c}(n)$, as $\beta_c = V_{ref,c}(n+1)$, or e.g. as an average $\beta_c = (V_{ref,c}(n) + V_{ref,c}(n+1))/2$, or similar. If having access to a mathematical function expressing $T'_{ref,c}(V_{ref,c})$, $\beta_c$ can instead be determined directly from the condition $$T'_{ref,c}(\beta_c) = \tau'_c$$. Charging of the reference set 110 may e.g. be performed by supplying power to the reference set 110 from the charging device 140 connected across the terminals of the reference set 110, and the charger may e.g. be controlled by the device 100, e.g. by the charging threshold module 210, as mentioned earlier herein.

A discharging threshold module 220 may also be provided as part of the device 100, and configured to, in a step S202, and similar to the charging threshold module 210, obtain/measure voltage and temperature for the reference set 110 but while instead discharging the reference set 110. As mentioned earlier herein, also the discharging may be performed at a controlled rate. The discharging may e.g. be performed by using the load 150 connected to the reference set 110, and controlled by the device 100, e.g. by the discharging threshold module 220. By measuring temperature $V_{ref,d}$ and voltage $V_{ref,d}$ of the reference set 110 while discharging the reference set 110 at the controlled rate, the discharging threshold module 220 may determine a discharging voltage threshold value $\beta_d$ corresponding to a voltage at which a rate of change of temperature $T'_{ref,d}(V_{ref,d})$ of the reference set 110 as function of voltage goes above a discharging temperature rate threshold value $\tau'_d$. As described above for the charging threshold module 210, this maybe obtained e.g. by defining $\beta_d$ as $\beta_d = V_{ref,d}(n)$, as $\beta_d = V_{ref,d}(n+1)$, or e.g. as an average $\beta_d = (V_{ref,d}(n)$

$+ V_{ref,d}(n + 1)) / 2$, or similar, where $t_n$ is a time where the rate of change of temperature is below the discharging temperature rate threshold value, and $t_{n+1}$ is a later time at which the rate of change of temperature is above the discharging temperature rate threshold value.

In the device 100, and while performing the corresponding method 200, one of the charging and discharging modules 210 and 220 may be optional, and consequently also one of the corresponding steps S201 and S202 of the method 200. Phrased differently, the device 100 and the method 200 are such that at least one, but not necessarily both, of the charging voltage threshold value $\beta_c$ and the discharging voltage threshold value $\beta_d$ is/are determined, as indicated by the various alternative flows shown in Figure 2A.

A storage module 230 may be provided as e.g. part of the device 100 (or external to the device 100) and configured to store the determined voltage threshold value(s) $\beta_c$ and/or $\beta_d$ such that they may be provided, at a later stage, to a controller configured to control a cooling of one or more battery cells (similar or equal to those of the reference set 110) using the respective voltage threshold values. Such storing may e.g. be performed in the storage 170 via the signal 172.

As mentioned earlier herein, the determining of the various voltage threshold values $\beta_c$ and $\beta_d$ may e.g. be performed by performing e.g. experiments and/or numerical simulations, and it is envisaged that e.g. the respective charging and discharging threshold determination module 210 and 220 is then configured for that purpose.

In some embodiments of the device 100, the device 100 may further be configured to control ambient temperature regulating means 160 optionally provided and configured to alter an ambient temperature $T_a$ of the reference set 110 during the charging and/or discharging of the reference set 110. For this purpose, an ambient temperature regulation module 240 may be provided, and configured to output the signal 162 to the temperature regulating means 160, as well as the requested (or actual) ambient temperature $T_a$ to the storage module 230, such that the voltage threshold value(s) $\beta_c$ and/or $\beta_d$ obtained/determined for different ambient temperatures may be stored in storage 170 by the storage module 230, and associated with the correct ambient temperature $T_a$, i.e. $\beta_c(T_a)$ and/or $\beta_d(T_a)$.

In some embodiments of the controller 100 and method 200, the actual charging and discharging rates may also be varied, and different voltage threshold values $\beta_c$ and $\beta_d$ may thus be determined for each such charging/discharging rate. For this purpose, an optional charging/discharging rate module 250 may be provided and configured to control an actual charging and/or discharging rate of the reference set 110, e.g. via the signals 142 and/or 152. The module 250 may further provide the determined charging/discharging rate(s) to the storage module 230, such that the storage module 230 may store correctly the threshold values and correctly associate them with the correct rates $C_c$ and $C_d$, respectively, i.e. $\beta_c(C_c)$ and/or $\beta_d(C_d)$. If also taking ambient temperature into account (as described in the previous paragraph hereof), the voltage threshold values may depend on both ambient temperature and on charging/discharging rate, e.g. $\beta_c(T_a, C_c)$ and/or $\beta_d(T_a, C_d)$, and be stored accordingly in storage 170 by the storage module 230. A controller using the voltage threshold values when controlling a cooling system can then measure e.g. $T_a$ and/or the current charging/discharging rate during charging or discharging, and select the appropriate voltage threshold value to use when controlling the cooling system based thereon.

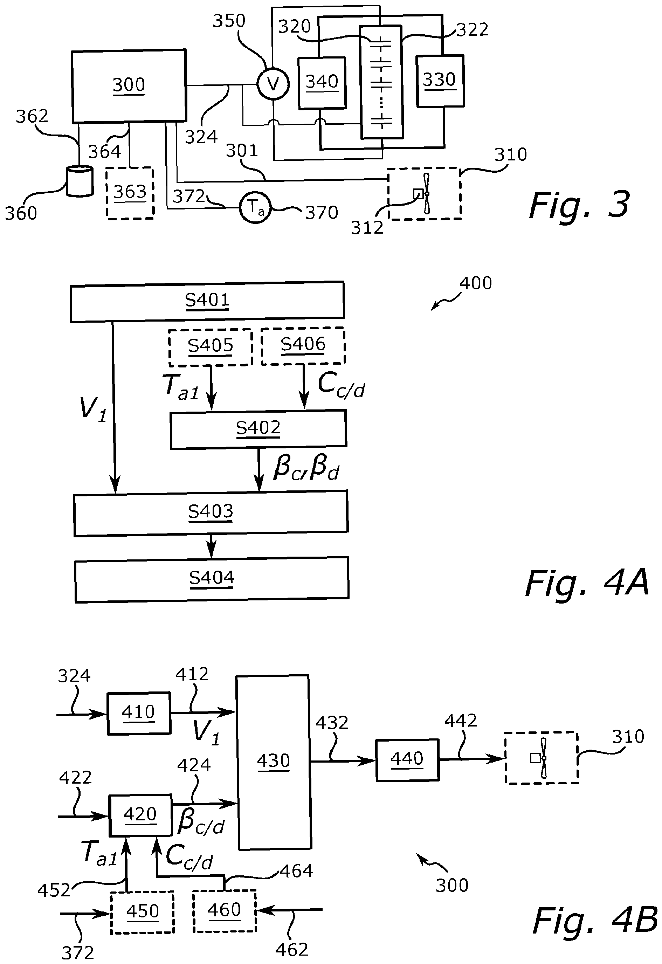

A controller which uses the above determined voltage threshold value(s) $\beta_c$ and/or $\beta_d$ will now be described with reference to Figure 3.

Figure 3 schematically illustrates embodiments of a controller 300 configured to control a cooling system 310. The cooling system 310 includes e.g. a fan 312 which is configured to blow air over one or more battery cells 320. As illustrated in Figure 3, the one or more battery cells 320 may e.g. form part of a battery pack 322, but may also be included in some other entity or be provided as standalone entities.

The cooling fan 312 is only provided as an example of how to cool the one or more battery cells 320, and the cooling system 310 may of course also, or instead, include other means for cooling such as e.g. a liquid-based cooling system using a cooling liquid, conduits and one or more pumps for transporting the cooling liquid to the one or more battery cells 320 (and battery pack 322, if included) and e.g. to an evaporator or similar. The exact form and configuration of the cooling system 310 is not important, as long as the cooling system 310 may provide cooling of the one or more battery cells 320, and as long as when (and how much) to cool the first set 320 may be controlled by the controller 300, using e.g. a control signal 301.

The one or more battery cells 320 are connected to provide electric power to a load 330, which may e.g. be a propulsion system of an electric vehicle (not shown), or any other consumer of electric power. The one or more battery cells 320 may also be connected to the charging module/device 340, which may charge the one or more battery cells 320 as needed. Phrased differently, the one or more battery cells 320 may either be charged (via the charging module/device 340) or discharged (via the load 330).

The controller is further configured to receive measurements of a first voltage $V_1$ across the one or more battery cells 320. The first voltage $V_1$ may e.g. be a voltage measured across all of the battery cells 320, some of the battery cells 320, or e.g. across only one of the battery cells 320. It may also be envisaged that the controller 300 may be configured to measure/obtain several voltages each measured across e.g. a respective one of the battery cells 320, e.g. a plurality of voltages

$V_1, V_2, ..., V_N$, where in this case $V_i$ is the voltage measured across the i:th battery cell 320, and where N is an integer corresponding to the total number of battery cells. For the present example, it will be assumed that the first voltage $V_1$ is a voltage across a first set of one or more of the battery cells 320, and that the first voltage $V_1$ is obtained during a charging or discharging of the first set 320. It is envisaged that e.g., if included, the battery pack 322 may include internal circuitry for measuring voltage across its battery cells 320, and that one or more such voltages may be communicated from the battery pack 322 to the controller 300 as a data signal 324 sent from the battery pack 322 to the controller 300. In other embodiments, the controller 300 may itself include the means required to perform voltage measurements across one or more battery cells, and the signal 324 may then e.g. represent such voltages. In some embodiments, for this purpose, the controller 300 may, as described earlier herein, instead, or in addition, use the voltage measuring means 350 to provide the signal 324. In some embodiments, the voltage measuring means 350 maybe an external entity, while in other embodiments the voltage measuring means 350 may form part of the controller 300 itself.

The controller 300 is further configured to obtain at least one of a charging voltage threshold value $\beta_c$ and a discharging voltage threshold value $\beta_d$ as discussed earlier herein. These values may e.g. be obtained from a storage 360 storing such values, via a signal 362, or e.g. from some other signal 364 from some other entity 363 having access to these threshold values. In other embodiments, the values $\beta_c$ and $\beta_d$ may be stored internally in the controller 300. As long as the controller 300 in some way has access to the values $\beta_c$ and $\beta_d$, exactly how the controller 300 obtains these values is not important. In yet further embodiments, the storage 360 may e.g. be the same storage 170 as described with reference to device 100 illustrated in Figure 1.

Optionally, the controller 300 may also be connected to (or include) ambient temperature measuring means 370 configured to measure an ambient temperature of the one or more battery cells of the first set 320, e.g. as part of a signal 372 provided to the controller 300.

How the envisaged controller 300 may perform embodiments of a (second) method as envisaged herein will now be described in more detail with reference also to Figures 4A and 4B.

Figure 4A schematically illustrates a flowchart of embodiments of a method 400 for controlling a cooling of one or more battery cells. Figure 4B schematically illustrates, in terms of a number of functional modules/blocks, the flow of information within the controller 300 while performing embodiments of the method 400.

A voltage determination module 410 of the controller 300 is provided and configured to, in a step S401 of the method 400, determine the first voltage $V_1$ across the first set of one or more battery cells 320 (hereinafter referred to as e.g. "the first set 320"), during a charging or discharging of the first set 320. As described earlier herein, to determine such a voltage, the voltage determination module 410 may e.g. use the voltage measuring means 350 providing the signal 324. The voltage determination module 410 may for example be configured to repeatedly measure the first voltage $V_1$, for example at discreet time points $t_j = j\Delta t$, where $j$ is an integer and $\Delta t$ a time difference between two consecutive measurements. Consequently, the voltage determination module 410 may provide a sequence of voltage measurements $V_{1,j}$ or $V_1(j)$, where $j$ indicates that the voltage measurement (of the first voltage $V_1$) was performed at time point $t_j$. The measurements of the first voltage $V_1$ may e.g. be output from the voltage determination module 410 as part of a signal 412. In some embodiments, the voltage determination module 410 may not be included, and the first voltage $V_1$ may then e.g. be provided directly from the volage measuring means 350 as part of the signal 324, i.e. the signal 412 equals the signal 324.

A voltage threshold module 420 of the controller 300 is provided and configured to, in a step S402, obtain at least one of the charging voltage threshold value $\beta_c$ and the discharging voltage threshold value $\beta_d$ for starting or increasing a battery cell cooling, e.g. as part of a signal 422. The signal 422 may for example be provided from the device 100 (either from storage 170 or directly as output from the any of the modules 210 and 220 of the device 100) described earlier herein with reference to e.g. Figures 1, 2A and 2B (and correspond to e.g. one or both of the signals 362 and 364), or from any other source (such as the entity 363) which has access to the voltage thresholds $\beta_c$ and $\beta_d$ obtained by performing the steps of the first method 200.

In other embodiments of the controller 300, the controller 300 may itself be responsible for performing the required steps of the first method 200. In such embodiments, it may e.g. be envisaged that the controller 300 uses the first set 320 as the reference set 110, or similar. In any situation, it is envisaged that the one or more battery cells of the first set 320 are at least similar to those of the reference set 110 used to obtain the voltage threshold value(s) $\beta_c$ and/or $\beta_d$. Herein, battery cells being "similar" to other battery cells may e.g. mean that they are of a same or similar type, have similar or same charging/discharging characteristics, or at least that a difference (if present) of e.g. measurement/simulation results (when e.g. measuring temperature and voltage during charging or discharging) between the sets are such that an expression allowing to predict the outcome for one set based on an outcome of the other set is possible to derive. The number of battery cells in e.g. the first set 320 may thus not necessarily be the same as the number of battery cells in the reference set 110, as long as such an expression is available/possible to derive.

The voltage threshold module 420 is further configured to output the voltage threshold(s) $\beta_c$ and/or $\beta_d$ as part of a signal 424.

A prediction module 430 of the controller 300 is provided and configured to, in a step S403, predict an upcoming increase in heat generation of the first set 320. To do so, the prediction module 430 receives the voltage measurement(s) $V_1(j)$ from the voltage determination module 410, e.g. as part of the signal 412, and one or both of the voltage thresholds $\beta_c$ and $\beta_d$ from the voltage threshold module 420, e.g. as part of the signal 424. The prediction module 430 may in some embodiments be configured to, if the first set 320 is charging (i.e. during a continued charging of the first set 320), detect, or predict, that the first voltage $V_1$ goes above the charging voltage threshold value $\beta_c$. In some embodiments, the prediction module 430 may instead, or in addition, be configured to, if the first set 320 is discharging (i.e. during a continued discharging of the first set 320), detect, or predict, that the first voltage $V_1$ goes below the discharging voltage threshold value $\beta_d$. The prediction module 430 is further configured to, if having made such a detection or prediction of the first voltage $V_1$ going above and/or below the respective voltage threshold value $\beta_c$ and $\beta_d$ (depending on whether the first set 320 is charging or discharging), output an indication of such detection/prediction having been made, for example as part of a signal 432.

Detecting that the first voltage $V_1$ goes above the voltage threshold value $\beta_c$ may e.g. be performed by noting that at a time $t_j$, the value of the first voltage is below the voltage threshold value, e.g. $V_1(j) < \beta_c$, and that at a later time $t_{j+1}$, the first voltage is instead at or above the voltage threshold value, e.g. $V_1(j+1) \geq \beta_c$. When detecting such a change, the indication in the signal 432 may be generated. Likewise, detecting that the first voltage $V_1$ goes below the voltage threshold value $\beta_d$ may be performed in a similar fashion, e.g. by noting the occurrence that $V_1(j) > \beta_d$ and $V_1(j+1) \leq \beta_d$. In other embodiments, the prediction module 430 may e.g. study the slope of the first voltage $V_1$ (as received from the voltage determination module 410), and instead predict that, in one or a few future time points, the first voltage $V_1$ is likely to go above/below the respective voltage threshold value $\beta_c$ and $\beta_d$. For example, if the first voltage at time $t_j$ is still below $\beta_c$ (i.e. $V_1(j) < \beta_c$), but the slope of the first voltage $V_1$ (with respect to time), as found from e.g. $V_1'(j) = (V_1(j) -$ $V_1(j-1))/\Delta t$ is above a slope threshold value, it may be assumed that the first voltage $V_1$ will soon hit and exceed the threshold value $\beta_c$, and the prediction module 430 may be more proactive and provide the indication in the signal 432 already then. For example, such a decision can be made if e.g. at $t_j$, it is

determined that $V_1(j) +$ $V_1'(j)\Delta t \geq \beta_c$ , or more generally that $V_1(j) + V_1'(j)K\Delta t \geq \beta_c$ , where $K$ is a lookahead factor indicating a time horizon for the prediction, such as e.g. $K = 1$, $K = 2$, ..., or similar. A same reasoning may be applied also to predict whether the first voltage $V_1$ is likely to soon go below the discharging voltage threshold value $\beta_d$, e.g. if determining that at $t_j$,

$$V_1(j) + V'(j)\Delta tK \leq \beta_d$$ , such that the indication in the signal 432 can be provided more proactively (during discharging of the first set 320).

A control module 440 of the controller 300 is provided and configured to, in a step S404, receive the indication in the signal 432 and to, in response to the above prediction of the upcoming increase in heat generation of the first set 320, start or increase a cooling of the first set 320, by for example sending a suitable control signal 442 to the cooling system 310.

In some embodiments of the controller 300 and the method 400, an ambient temperature module 450 may be provided and configured to, in an optional step S405 of the method 400, determine, e.g. by using the ambient temperature measuring means 370, and as e.g. part of the signal 372, a first ambient temperature $T_{a1}$ of the first set 320, and to provide this first ambient temperature as part of a signal 452 to the voltage threshold module 420. The voltage threshold module 420 may then, in such embodiments, be further configured to receive the signal 452 and the first ambient temperature $T_{a1}$, and to use the first ambient temperature to obtain the corresponding voltage threshold(s) $\beta_c(T_{a1})$ and/or $\beta_d(T_{a1})$ which best matches the first ambient temperature $T_{a1}$ (e.g. by using interpolation or extrapolation, if an exact match is not possible), as described earlier herein. In other embodiments, the ambient temperature module 450 may not be included at all, and the signal 372 and the first ambient temperature $T_{a1}$ may then instead be provided directly to the voltage threshold module 420.

In some embodiments of the controller 300 and the method 400, a charging/discharging rate module 460 may be provided and configured to, in an optional step S406 of the method 400, determine a current charging or discharging rate of the first set 320 by receiving a signal 462 indicative thereof. The signal 462 may e.g. be provided by means (not shown) suitable for measuring such a charging/discharging rate, such as e.g. one or more current sensors provided to measure a current input/output of the first set 320. The obtained charging/discharging rate of the first set 320 may be provided to the voltage threshold module 420 as part of e.g. a signal 464, and the voltage threshold module 420 may in such embodiments be configured to receive the signal 464, and to obtain the voltage threshold value(s) $\beta_c(C_c)$ and/or $\beta_d(C_d)$ which best matches the determined charging/discharging rates $C_c$ and $C_d$. If using also the ambient temperature module 450, the obtained threshold values may take into account both ambient temperature $T_{a1}$ and charging/discharging rate C, i.e. $\beta_c(T_{a1}, C_c)$ and/or $\beta_d(T_{a1}, C_d)$, as described earlier herein. In some embodiments, the charging/discharging rate module 460 may not be included at all, the signal 462 may instead be provided directly to the voltage threshold module 420.

Although not explicitly shown in any Figure of the drawings, the present disclosure also envisages to provide a vehicle. The vehicle includes a first set of one or more battery cells (such as the first set 320) configured to provide power to a propulsion system (such as the load 330) of the vehicle. The vehicle also includes a cooling system (such as the cooling system 310) configured to provide a cooling of the first set, and a controller (such as the controller 300) as described herein.

The present disclosure also envisages to provide e.g. just the controller 300 as part of the cooling system 310, or similar (i.e. not necessarily within a vehicle, but as a standalone system which may be used in other entities than vehicles, such as in battery power banks, charging stations, or similar).

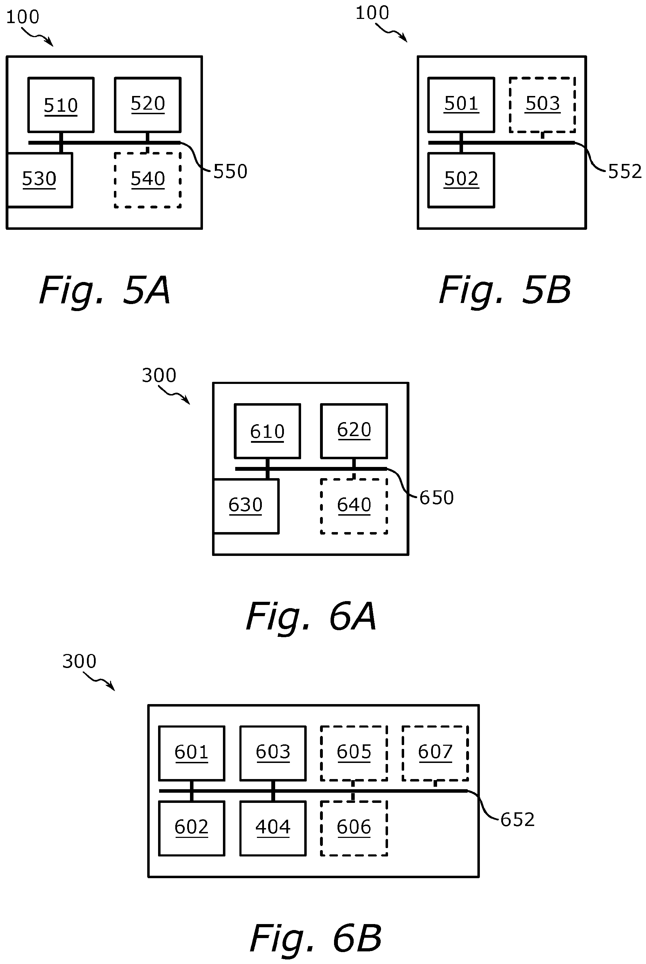

With reference to Figures 5A and 5B, and 6A and 6B, various embodiments of a device and controller as envisaged herein will now be described in more detail.

Figure 5A schematically illustrates, in terms of a number of functional units, the components of an embodiment of a device 100 as envisaged and described earlier herein. The device 100 includes processing circuitry 510. The processing circuitry 510 is provided using any combination of one or more of a suitable central processing unit (CPU), multiprocessor, microcontroller, digital signal processor (DSP), etc., capable of executing software instructions stored in a computer program product (not shown, but envisaged herein) stored on a storage medium 520. The processing circuitry 510 may further be provided as at least one application specific integrated circuit (ASIC), or field-programmable gate array (FPGA), or similar.

Particularly, the processing circuitry 510 is configured to cause the device 100 to perform a set of operations, or steps, such as one or more of steps S201 and S202 as disclosed above e.g. when describing the method 200 illustrated in Figures 2A and/or 2B. For example, the storage medium 520 may store a set of operations, and the processing circuitry 510 may be configured to retrieve the set of operations from the storage medium 520 to cause the device 100 to perform the set of operations. The set of operations may be provided as a set of executable instructions. Thus, the processing circuitry 510 is thereby arranged to execute methods as disclosed herein e.g. with reference to Figures 2A and 2B.

The storage medium 520 may also include persistent storage, which, for example, can be any single or combination of magnetic memory, optical memory, solid state memory or even remotely mounted memory. The storage medium 520 may thus provide non-transitory storage, storing computer-readable instructions for the processing circuitry 510.

The device 100 may further include a communications interface 530 for communications with other entities and objects, in order to communicate with e.g. the voltage measuring means 120, the temperature measuring means 130, the charging device 140, the load 150, the ambient temperature regulating means 160, and/or the storage 170, including receiving/sending the signals 122, 132, 142, 152, 162 and 172 as required. The communications interface 530 may include one or more transmitters and receivers, including analogue and/or digital components, and may utilize e.g. one or more wired and/or wireless connections for this purpose.

The processing circuitry 510 controls the general operation of the device 100 e.g. by sending data and control signals to the communications interface 530 and the storage medium 520, by receiving data and reports from the communications interface 530, and by retrieving data and instructions from the storage medium 520. The device 100 may of course optionally also include other components, here illustrated by the dashed box 540. A communication bus 550 is also provided and connects the various modules/units 510, 520, 530, and 540 (if included), such that they may communicate with each other to exchange information.

Figure 5B schematically illustrates, in terms of a number of functional modules 501-503, the components of a device 100 according to one or more embodiments of the present disclosure. The device 100 includes at least one of a charging threshold determination module 501 configured to perform step S201 of the method 200 described with reference to Figure 2A or 2B (e.g. corresponding to the module 210), and a discharging threshold determination module 502 configured to perform step S202 (e.g. corresponding to the module 220). A communication bus 552 (which may be a logical bus and/or a physical bus) is provided such that the various functional modules 501 and/or 502 may output their determined threshold values, and (in some embodiments) also communicate with each other if needed.

In general terms, each functional module (such as modules 501 and 502) may be implemented in hardware or in software. Preferably, one or more or all functional modules may be implemented by the processing circuitry 510, possibly in cooperation with the communications interface 530 and/or the storage medium 520. The processing circuitry 510 may thus be arranged to from the storage medium 520 fetch instructions as provided by a functional module (e.g. 501 and/or 502), and to execute these instructions and thereby perform any steps of the method 200, or any other method envisaged herein, performed by the device 100 as disclosed herein. The device 100 may of course also include one or more additional functional modules (as illustrated by the dashed box 503), which may be implemented as described above and used to perform other steps involved in e.g. determining the one or more voltage threshold values for controlling a cooling of one or more battery cells or similar. The device 100 may e.g. be the device 100 illustrated and described herein with reference to Figures 1, 2A and/or 2B.

Figure 6A schematically illustrates, in terms of a number of functional units, the components of an embodiment of a controller 300 as envisaged and described earlier herein. The controller 300 includes processing circuitry 610. The processing circuitry 610 is provided using any combination of one or more of a suitable central processing unit (CPU), multiprocessor, microcontroller, digital signal processor (DSP), etc., capable of executing software instructions stored in a computer program product (not shown, but envisaged herein) stored on a storage medium 620. The processing circuitry 610 may further be provided as at least one application specific integrated circuit (ASIC), or field-programmable gate array (FPGA), or similar.

Particularly, the processing circuitry 610 is configured to cause the controller 300 to perform a set of operations, or steps, such as one or more of steps S401-S404, and optionally also steps S405 and/or S406, as disclosed above e.g. when describing the method 400 illustrated in Figures 4A and/or 4B. For example, the storage medium 620 may store a set of operations, and the processing circuitry 610 may be configured to retrieve the set of operations from the storage medium 620 to cause the controller 300 to perform the set of operations. The set of operations may be provided as a set of executable instructions. Thus, the processing circuitry 610 is thereby arranged to execute methods as disclosed herein e.g. with reference to Figures 4A and 4B.

The storage medium 620 may also include persistent storage, which, for example, can be any single or combination of magnetic memory, optical memory, solid state memory or even remotely mounted memory. The storage medium 620 may thus provide non-transitory storage, storing computer-readable instructions for the processing circuitry 610.

The controller 300 may further include a communications interface 630 for communications with other entities and objects, in order to communicate with e.g. the cooling system 310, the voltage measuring means 350, the storage 360, the ambient temperature measuring means 370, or e.g. an entity configured to determine a current charging/discharging rate of the first set 320, and also including receiving/sending e.g. the signals 301, 324, 362, 364 and 372 as required. The communications interface 630 may include one or more transmitters and receivers, including analogue and/or digital components, and may utilize e.g. one or more wired and/or wireless connections for this purpose.

The processing circuitry 610 controls the general operation of the controller 300 e.g. by sending data and control signals to the communications interface 630 and the storage medium 620, by receiving data and reports from the communications interface 630, and by retrieving data and instructions from the storage medium 620. The controller 300 may of course optionally also include other components, here illustrated by the dashed box 640. A communication bus 650 is also provided and connects the various modules/units 610, 620, 630, and 640 (if included), such that they may communicate with each other to exchange information.

Figure 6B schematically illustrates, in terms of a number of functional modules 601-604, the components of a controller 300 according to one or more embodiments of the present disclosure. The controller 300 includes at least one of a voltage determination module 601 configured to perform step S401 of the method 400 described with reference to Figures 4A and/or 4B (e.g. corresponding to the module 410), a voltage threshold module 602 configured to perform step S402 (e.g. corresponding to the module 420), a prediction module 603 configured to perform step S403 (e.g. corresponding to the module 430), and a control module 604 configured to perform step S404 (e.g. corresponding to the module 440). A communication bus 652 (which may be a logical bus and/or a physical bus) is provided such that the various functional modules 601-604 may communicate with each other as/if needed. Optionally, the controller 300 may also include one or both of an ambient temperature module 605 configured to perform optional step S405 (e.g. corresponding to the module 450) and a charging/discharging rate module 606 configured to perform optional step S406 (e.g. corresponding to the module 460).

In general terms, each functional module (such as modules 601-604, and optionally also one or both of 605 and 606) may be implemented in hardware or in software. Preferably, one or more or all functional modules may be implemented by the processing circuitry 610, possibly in cooperation with the communications interface 630 and/or the storage medium 620. The processing circuitry 610 may thus be arranged to from the storage medium 620 fetch instructions as provided by a functional module (e.g. 601-604 and optionally 605/606), and to execute these instructions and thereby perform any steps of the method 400, or any other method envisaged herein, performed by the controller 300 as disclosed herein. The controller 300 may of course also include one or more additional functional modules (as illustrated by the dashed box 607), which may be implemented as described above and used to perform other steps involved in e.g. determining the one or more voltage threshold values for controlling a cooling of one or more battery cells or similar. The controller 300 may e.g. be the controller 300 illustrated and described herein with reference to Figures 3, 4A and/or 4B.

The present disclosure also envisages to provide a computer program (not shown) for a device as envisaged herein, as well as a computer program for a controller as envisaged herein. The computer program for the device includes computer code that, when running on a processing circuitry of the device (such as e.g. the processing circuitry 510 of the device 100 described with reference to Figures 5A and 5B), causes the device to perform the various steps of the first method (such as e.g. method 200) as described and envisaged herein. The computer program for the controller includes computer code that, when running on a processing circuitry of the controller (such as e.g. the processing circuitry 610 of the controller 300 described with reference to Figures 6A and 6B), causes the controller to perform the various steps of the second method (such as e.g. method 400) as described and envisaged herein.

The present disclosure also envisages one or more computer program products (not shown) in which one or both of the above envisaged computer programs are stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable. The data carrier may e.g. be any of the computer-readable storage mediums 520 and 620 described above e.g. with reference to Figures 5A and 5B, and 6A and 6B.

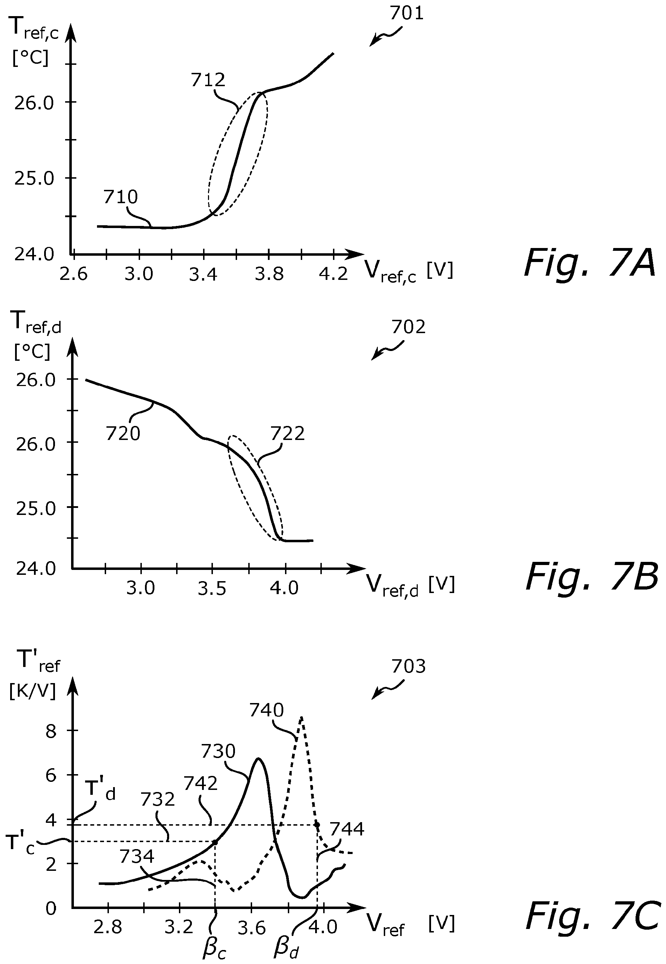

Finally, various examples of the behavior of temperature and voltage across a reference set of one or more battery cells during charging and discharging, and how the herein envisaged voltage threshold values can be obtained therefrom, will now be described in more detail with reference also to Figures 7A to 7C.

Figure 7A schematically illustrates a plot 701 of a first curve 710 which indicates the results of measurements of temperature $T_{ref,c}$ and voltage $V_{ref,c}$ during charging of the reference set, where the temperature (vertical axis) is measured in degrees Celsius, and where the voltage (horizontal axis) is measured in Volts. In this particular example, there is only a single battery cell in the reference set, and the voltage $V_{ref,c}$ therefore corresponds to battery cell voltage. The charging of the battery cell is performed at an ambient temperature of 23 degrees Celsius (i.e. $T_a = 23\ °C$), and at a charging rate of $C_c$ =iC. As indicated by the marked region 712, there is an abrupt increase in generated heat starting when the cell voltage reaches (i.e. starts going above) approximately 3.5 Volts (i.e. when $V_{ref,c} = 3.5\ V$).

Figure 7B schematically illustrates a plot 702 of a second curve 720 which instead indicates the results of measurements of temperature $T_{ref,d}$ and voltage $V_{ref,d}$ during discharging of the same reference set as in Figure 7A. The discharging of the battery cell was performed at a same ambient temperature ($T_a = 23\ °C$), and at a discharging rate $C_d$ = 1C. As indicated by the marked region 722, there is an abrupt increase in generated heat starting when the cell voltage reaches (i.e. starts going below) approximately 4 Volts (i.e. $V_{ref,d} = 4V$).

Figure 7C schematically illustrates a plot 703 of third and fourth curves 730 and 740, which illustrate the envisaged solution of how to use the temperature and voltage measurements of Figures 7A and 7B, respectively, for controlling a cooling of battery cells. The curves 730 and 740 are differentials of the temperature and voltage during charging and discharging, respectively. Phrased differently, the curve 730 illustrates how a rate of change of temperature $(T'_{ref,c})$ with respect to voltage changes when the battery cell voltage $V_{ref,c}$ changes (i.e. increases) during charging of the battery cell, and the curve 740 illustrates how a rate of change of temperature $(T'_{ref,d})$ with respect to voltage changes when the battery cell voltage $V_{ref,d}$ changes (i.e. decreases) during discharging of the battery cell. The voltage $V_{ref}$ (horizontal axis) is still measured in Volts (and represents both $V_{ref,c}$ and $V_{ref,d}$), while the rate of change of the temperature, $T'_{ref}(V_{ref}) = dT_{ref}/dV_{ref}$, is measured in e.g. degrees Celsius per Volt (°C/V), or e.g. degrees Kelvin per Volt (K/V).

If comparing both Figures 7A and 7B to Figure 7C, it is seen from Figure 7C that the increase in heat generation indicated by the region 712 of Figure 7A can be predicted by detecting when the curve 730 of Figure 7C goes above a charging temperature rate threshold value $\tau'_c$. For example, in the particular example shown in Figures 7A to 7C, such a charging temperature rate threshold value $\tau'_c$ may e.g. be defined as $\tau'_{ref} = 3.0\ K/V$, as indicated by the horizontal line 732 in Figure 7C. A corresponding charging voltage threshold value $\beta_c$ can thus be defined as approximately $\beta_c$ = 3.4 V, as indicated by the vertical line 734 in Figure 7C. Similarly, but for the discharging case, the discharging temperature rate threshold $\tau'_d$ may be defined as $\tau'_d = 3.75\ K/V$, as indicated by the horizontal line 742 in Figure 7C. A corresponding discharging voltage threshold value $\beta_d$ can be defined as approximately $\beta_d$ = 3.95 V, as indicated by the vertical line 744 in Figure 7C. Other values of the charging/discharging temperature rate thresholds $\tau'_c$ and $\tau'_d$ are of course also possible, and may be defined based on the exact current implementation of the envisaged solution presented herein.

Consequently, the voltage thresholds $\beta_c$ and $\beta_d$ may thus be defined such that they provide an indication about an upcoming increase in heat generation in the battery cell. A controller, as envisaged herein, may then detect (or predict) when, during charging of a battery cell, the first voltage $V_1$ across the battery cell (which is similar, or equal, to the battery cell used in the measurements depicted in Figures 7A to 7C) exceeds $\beta_c$, and start or increase a cooling of the battery cell in advance of the corresponding temperature increase (indicated by the region 712). Similarly, the controller may detect (or predict) when, during discharging of the battery cell, the first voltage $V_1$ across the battery cell goes below $\beta_d$, and start

or increase a cooling of the battery cell in advance of the corresponding temperature increase (indicated by the region 722).

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims. For all methods disclosed herein and described herein, the order of these steps may not necessarily be as illustrated in the corresponding Figures. To the contrary, if not explicitly stated otherwise, the order of the steps of any method disclosed herein may be changed while still maintaining the intended functionality of the method.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

In summary of the present disclosure, it is provided a solution of how to overcome a problem with delay in cooling control of one or more battery cells caused by temperature sensors having a slow response. By removing the need for temperature sensors and instead relying on measuring a voltage across the battery cells to predict an upcoming increase in heat generation, the envisaged solution present herein allows for the cooling to be started/increased earlier, and more proactively, which may avoid unnecessary degradation of the battery cells and improve battery cell life and economy. This while only requiring a rather simple voltage measurement.

## Claims

1. A method (200) of determining one or more voltage threshold values for controlling a cooling of one or more battery cells, comprising at least one of:

    i) determining (S201), during a charging of a reference set (110) of one or more battery cells (112), a charging voltage threshold value ($\beta_c$) for starting or increasing a battery cell cooling, the charging voltage threshold value corresponding to a voltage $V_{ref,c}$ across the reference set at which a rate of change of temperature $T'_{ref,c}$ with respect to voltage of the reference set goes above a charging temperature rate threshold value $(\tau'_c)$, and

    ii) determining (S202), during a discharging of the reference set of one or more battery cells, a discharging voltage threshold value ($\beta_d$) for starting or increasing a battery cell cooling, the discharging voltage threshold value corresponding to a voltage ($V_{ref,d}$) across the reference set at which a rate of change of temperature $(T'_{ref,d})$ with respect to voltage of the reference set goes above a discharging temperature rate threshold value $(\tau'_d)$.

2. The method according to claim 1, wherein the method includes determining at least one of the charging and discharging voltage threshold values from one or more experimental measurements of temperature of, and voltage across, the reference set during the respective charging and discharging of the reference set.

3. The method according to claim 1 or 2, wherein the method includes determining at least one of the charging and discharging voltage threshold values from one or more numerical simulations of temperature of, and voltage across, the reference set during the respective charging or discharging of the reference set.

4. The method according to any one of claims 1 to 3, wherein the method further includes performing the charging or discharging of the reference set at a plurality of different ambient temperatures ($T_a$) of the reference set, and determining at least one of the charging and discharging voltage threshold values ($\beta_c(T_a)$, $\beta_d(T_a)$) for each of the different ambient temperatures of the reference set.

5. A device (100) for determining one or more voltage threshold values for controlling a cooling of one or more battery cells, comprising processing circuitry (510) configured to cause the device to:

    i) determine (S201), during a charging of a reference set (110) of one or more battery cells (112), a charging voltage threshold value ($\beta_c$) for starting or increasing a battery cell cooling, the charging voltage threshold value corresponding to a voltage $(V_{ref,c})$ across the reference set at which a rate of change of temperature $(T'_{ref,c})$ with respect to voltage of the reference set goes above a charging temperature rate threshold value $(\tau'_c)$, and/or

    ii) determine (S202), during a discharging of the reference set of one or more battery cells, a dis-

charging voltage threshold value ($\beta_d$) for starting or increasing a battery cell colling, the discharging voltage threshold value corresponding to a voltage ($V_{ref,d}$) across the reference set at which a rate of change of temperature $(T'_{ref,d})$ with respect to voltage of the reference set goes above a discharging temperature rate threshold value $(\tau'_d)$.

6. The device according to claim 5, wherein the processing circuitry is further configured to cause the device to perform a method according to any one of claims 2 to 4.

7. A method (400) of controlling a cooling of one or more battery cells, comprising:

   - determining (S401) a first voltage ($V_1$) across a first set (320) of one or more battery cells during a charging or discharging of the first set;
   - obtaining (S402) at least one of a charging voltage threshold value ($\beta_c$) and a discharging voltage threshold value ($\beta_d$) for starting or increasing a battery cell cooling, wherein the at least one of the charging voltage threshold value and the discharging voltage threshold value has been determined by performing a method (200) according to any one of claims 1 to 4, and wherein the one or more battery cells (112) of the reference set (110) are at least similar to the one or more battery cells of the first set;
   - predicting (S403) an upcoming increase in heat generation of the first set by detecting or predicting that a) during a continued charging of the first set, the first voltage goes above the charging voltage threshold value, or b) during a continued discharging of the first set, the first voltage goes below the discharging voltage threshold value, and
   - in response to predicting the upcoming increase in heat generation of the first cell, starting or increasing (S404) a cooling of the first set.

8. The method according to claim 7, wherein the method includes performing, as part of obtaining the at least one of the charging voltage threshold value and the discharging voltage threshold value, the method according to any one of claims 1 to 4.

9. The method according to claim 7 or 8, wherein the method further includes determining (S405), during charging or discharging of the first set, a first ambient temperature ($T_{a1}$) of the first set, and obtaining the at least one of the charging voltage threshold value ($\beta_c(T_{a1})$) and the discharging voltage threshold value

($\beta_d(T_{a1})$) based on the first ambient temperature.

10. A controller (300) for a cooling system (310) for one or more battery cells, comprising processing circuitry configured to cause the controller to:

    - determine (S401) a first voltage $V_1$ across a first set (320) of one or more battery cells during a charging or discharging of the first set;
    - obtain (S402) at least one of a charging voltage threshold value ($\beta_c$) and a discharging voltage threshold value ($\beta_d$);
    - predict (S403) an upcoming increase in heat generation of the first set by detecting or predicting that a) during a continued charging of the first set, the first voltage goes above the charging voltage threshold value, or b) during a continued discharging of the first set, the first voltage goes below the discharging voltage threshold value, and
    - in response to predicting the upcoming increase in heat generation of the first set, control (S404) the cooling system to start or increase a cooling of the first set.

11. The controller according to claim 8, wherein the processing circuitry is further configured to cause the controller to perform a method (400) according to claim 8 or 9.

12. A vehicle, comprising:

    a first set (320) of one or more battery cells configured to provide power to a propulsion system (330) of the vehicle;
    a cooling system (310) configured to provide a cooling of the first set, and
    a controller (300) for the cooling system according to claim 10 or 11.

13. A computer program for determining one or more voltage threshold values for controlling a cooling of one or more battery cells, the computer program comprising computer code that, when running on processing circuitry (510) of a device (100), causes the device to:

    i) determine (S201), during a charging of a reference set (110) of one or more battery cells (112), a charging voltage threshold value ($\beta_c$) for starting or increasing a battery cell cooling, the charging voltage threshold value corresponding to a voltage ($V_{ref,c}$) across the reference set at which a rate of change of temperature $(T'_{ref,c})$ with respect to voltage of the reference set goes above a charging temperature

rate threshold value $(\tau_c')$, and/or

ii) determine (S202), during a discharging of the reference set of one or more battery cells, a discharging voltage threshold value ($\beta_d$) for starting or increasing a battery cell cooling, the discharging voltage threshold value corresponding to a voltage ($V_{ref,c}$) across the reference set at which a rate of change of temperature ($T_{ref,d}'$) with respect to voltage of the reference set goes above a discharging temperature rate threshold value $(\tau_d')$.

14. A computer program for controlling a cooling system (310) for one or more battery cells, the computer program comprising computer code that, when running on processing circuitry (610) of a controller (300) for the cooling system, causes the controller to:

- determine (S401) a first voltage ($V_1$) across a first set (320) of one or more battery cells during a charging or discharging of the first set;
- obtain (S402) at least one of a charging voltage threshold value ($\beta_c$) and a discharging voltage threshold value ($\beta_d$);
- predict (S403) an upcoming increase in heat generation of the first set by detecting or predicting that a) during a continued charging of the first set, the first voltage goes above the charging voltage threshold value, or b) during a continued discharging of the first set, the first voltage goes below the discharging voltage threshold value, and
- in response to predicting the upcoming increase in heat generation of the first set, control (S404) the cooling system to start or increase a cooling of the first set.

15. A computer program product comprising a computer program according to claim 13 or 14, and a computer-readable storage medium on which the computer program is stored.

Fig. 1

Fig. 2A

Fig. 2B

Fig. 3

Fig. 4A

Fig. 4B

Fig. 5A

Fig. 5B

Fig. 6A

Fig. 6B

*Fig. 7A*

*Fig. 7B*

*Fig. 7C*

Europäisches
Patentamt

European
Patent Office

Office européen
des brevets

# EUROPEAN SEARCH REPORT

Application Number

EP 22 19 9150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 132850 A1 (VOLKSWAGEN AG [DE]) 25 June 2020 (2020-06-25) * paragraphs [0023] – [0039]; figure 1 * | 1-3,5-8, 10-15 | INV. H01M10/625 H01M10/613 H01M10/633 H01M10/651 H01M10/652 |
| A | CN 109 216 789 A (QINGDAO HENGJINYUAN ELECT TECH CO LTD) 15 January 2019 (2019-01-15) * the whole document * | 1-15 | |
| A | US 2005/017692 A1 (IZUMI YOSHIKAZU [JP] ET AL) 27 January 2005 (2005-01-27) * the whole document * | 1-15 | |

TECHNICAL FIELDS
SEARCHED        (IPC)

H01M

The present search report has been drawn up for all claims

| Place of search | Date of completion of the search | Examiner |
|---|---|---|
| Munich | 30 March 2023 | Brune, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 19 9150**

This annex lists the patent family members relating to the patent documents cited in the above-mentioned European search report.
The members are as contained in the European Patent Office EDP file on
The European Patent Office is in no way liable for these particulars which are merely given for the purpose of information.

**30-03-2023**

| Patent document cited in search report | Publication date | Patent family member(s) | Publication date |
|---|---|---|---|
| DE 102018132850 A1 | 25-06-2020 | CN 113195300 A<br>DE 102018132850 A1<br>WO 2020127752 A1 | 30-07-2021<br>25-06-2020<br>25-06-2020 |
| CN 109216789 A | 15-01-2019 | NONE | |
| US 2005017692 A1 | 27-01-2005 | CN 1577948 A<br>JP 2005065476 A<br>TW 200505074 A<br>US 2005017692 A1 | 09-02-2005<br>10-03-2005<br>01-02-2005<br>27-01-2005 |

EPO FORM P0459

For more details about this annex : see Official Journal of the European Patent Office, No. 12/82